# EUROPEAN PATENT SPECIFICATION

(11) **EP 4 396 303 B1**
(45) Date of publication and mention of the grant of the patent: **28.10.2026**
(21) Application number: 22864503.2
(22) Date of filing: 29.08.2022
(51) Int. Cl.: C09K 11/02, C09K 11/06, F21K 2/04

(54) **AMORPHOUS TRIBOLUMINESCENT MATERIAL, METHOD FOR PRODUCING THE SAME, METHOD FOR GENERATING LIGHT EMISSION IN AMORPHOUS TRIBOLUMINESCENT LAYER, AND MECHANORESPONSIVE SENSOR**
AMORPHES TRIBOLUMINESZENTES MATERIAL, VERFAHREN ZUR HERSTELLUNG DAVON, VERFAHREN ZUR ERZEUGUNG VON LICHTEMISSION IN EINER AMORPHEN TRIBOLUMINESZENTEN SCHICHT UND MECHANOEMPFINDLICHER SENSOR
MATÉRIAU TRIBOLUMINESCENT AMORPHE, SON PROCÉDÉ DE PRODUCTION, PROCÉDÉ DE GÉNÉRATION D'ÉMISSION DE LUMIÈRE DANS UNE COUCHE TRIBOLUMINESCENTE AMORPHE ET CAPTEUR MÉCANOSENSIBLE

(30) Priority: 02.09.2021 JP 2021143024
(43) Date of publication of application: 10.07.2024
(73) Proprietor: Okinawa Institute of Science and Technology School Corporation, Kunigami-gun, Okinawa 904-0495 (JP)
(72) Inventor: KARIMATA Ayumu, Kunigami-gun, Okinawa 904-0495 (JP); KHUSNUTDINOVA Julia, Kunigami-gun, Okinawa 904-0495 (JP)
(74) Representative: Zimmermann & Partner Patentanwälte mbB
(86) International application number: PCT/JP2022/032429
(87) International publication number: WO 2023/032921

(56) References cited:
- WO-A1-2015/053326
- CN-A- 111 628 087
- JP-A- H10 130 639
- JP-A- H10 130 639
- INCEL ANIL ET AL: "Integration of Triboluminescent EuD 4 TEA Crystals to Transparent Polymers: Impact Sensor Application", ACS APPLIED MATERIALS & INTERFACES, vol. 9, no. 7, 9 February 2017 (2017-02-09), United States, pages 6488 - 6496, XP093042377, ISSN: 1944-8244, DOI: 10.1021/acsami.6b16330
- HASEGAWA YASUCHIKA: "Photofunctional Lanthanoid Complexes, Coordination Polymers, and Nanocrystals for Future Photonic Applications", BULLETIN OF THE CHEMICAL SOCIETY OF JAPAN, vol. 87, no. 10, 15 October 2014 (2014-10-15), pages 1029 - 1057, XP093042378, ISSN: 0009-2673, DOI: 10.1246/bcsj.20140155
- GEORGE T.M. ET AL: "Bright red luminescence and triboluminescence from PMMA-doped polymer film materials supported by Eu 3+ -triphenylphosphine based [beta]-diketonate and 4,5-bis(diphenylphosphino)-9,9-dimethylxanthene oxide", JOURNAL OF PHOTOCHEMISTRY, vol. 317, 1 February 2016 (2016-02-01), AMSTERDAM, NL, pages 88 - 99, XP093042388, ISSN: 1010-6030, DOI: 10.1016/j.jphotochem.2015.11.016
- INCEL ANIL ET AL: "Triboluminescent Electrospun Mats with Blue-Green Emission under Mechanical Force", THE JOURNAL OF PHYSICAL CHEMISTRY C, vol. 121, no. 21, 12 May 2017 (2017-05-12), US, pages 11709 - 11716, XP093042393, ISSN: 1932-7447, DOI: 10.1021/acs.jpcc.7b02875
- KARIMATA AYUMU ET AL: "Triboluminescence of a new family of Cu I -NHC complexes in crystalline solid and in amorphous polymer films", vol. 11, no. 39, 14 October 2020 (2020-10-14), United Kingdom, pages 10814 - 10820, XP055887496, ISSN: 2041-6520, Retrieved from the Internet <URL:https://pubs.rsc.org/en/content/articlepdf/2020/sc/d0sc04442c> DOI: 10.1039/D0SC04442C
- İNCEL ANIL, EMIRDAG-EANES MEHTAP, MCMILLEN COLIN D., DEMIR MUSTAFA M.: "Integration of Triboluminescent EuD 4 TEA Crystals to Transparent Polymers: Impact Sensor Application", APPLIED MATERIALS & INTERFACES, AMERICAN CHEMICAL SOCIETY, US, vol. 9, no. 7, 22 February 2017 (2017-02-22), US , pages 6488 - 6496, XP093042377, ISSN: 1944-8244, DOI: 10.1021/acsami.6b16330
- HASEGAWA YASUCHIKA: "Photofunctional Lanthanoid Complexes, Coordination Polymers, and Nanocrystals for Future Photonic Applications", BULLETIN OF THE CHEMICAL SOCIETY OF JAPAN, CHEMICAL SOCIETY OF JAPAN,NIPPON KAGAKUKAI, JP, vol. 87, no. 10, 15 October 2014 (2014-10-15), JP , pages 1029 - 1057, XP093042378, ISSN: 0009-2673, DOI: 10.1246/bcsj.20140155
- ELISEEVA SVETLANA V., PLESHKOV DMITRY N., LYSSENKO KONSTANTIN A., LEPNEV LEONID S., BÜNZLI JEAN-CLAUDE G., KUZMINA NATALIA P.: "Highly Luminescent and Triboluminescent Coordination Polymers Assembled from Lanthanide β-Diketonates and Aromatic Bidentate O -Donor Ligands", INORGANIC CHEMISTRY, AMERICAN CHEMICAL SOCIETY, EASTON , US, vol. 49, no. 20, 18 October 2010 (2010-10-18), Easton , US , pages 9300 - 9311, XP093042380, ISSN: 0020-1669, DOI: 10.1021/ic100974e
- TAO PENG, LIU SHU‐JUAN, WONG WAI‐YEUNG: "Phosphorescent Manganese(II) Complexes and Their Emerging Applications", ADVANCED OPTICAL MATERIALS, WILEY, DE, vol. 8, no. 20, 1 October 2020 (2020-10-01), DE , pages 2000985, XP093042385, ISSN: 2195-1071, DOI: 10.1002/adom.202000985
- GEORGE T.M., SAJAN M.J., GOPAKUMAR N., REDDY M.L.P.: "Bright red luminescence and triboluminescence from PMMA-doped polymer film materials supported by Eu 3+ -triphenylphosphine based β-diketonate and 4,5-bis(diphenylphosphino)-9,9-dimethylxanthene oxide", JOURNAL OF PHOTOCHEMISTRY, ELSEVIER, AMSTERDAM, NL, vol. 317, 1 February 2016 (2016-02-01), AMSTERDAM, NL, pages 88 - 99, XP093042388, ISSN: 1010-6030, DOI: 10.1016/j.jphotochem.2015.11.016
- FONTENOT ROSS S, HOLLERMAN WILLIAM A, BHAT KAMALA N, AGGARWAL MOHAN D, PENN BENJAMIN G: "Incorporating strongly triboluminescent europium dibenzoylmethide triethylammonium into simple polymers", POLYMER JOURNAL, NATURE PUBLISHING GROUP UK, LONDON, vol. 46, no. 2, 1 February 2014 (2014-02-01), London , pages 111 - 116, XP093042389, ISSN: 0032-3896, DOI: 10.1038/pj.2013.78
- İNCEL ANIL, VARLIKLI CANAN, MCMILLEN COLIN D., DEMIR MUSTAFA M.: "Triboluminescent Electrospun Mats with Blue-Green Emission under Mechanical Force", THE JOURNAL OF PHYSICAL CHEMISTRY C, AMERICAN CHEMICAL SOCIETY, US, vol. 121, no. 21, 1 June 2017 (2017-06-01), US , pages 11709 - 11716, XP093042393, ISSN: 1932-7447, DOI: 10.1021/acs.jpcc.7b02875
- KARIMATA AYUMU, PATIL PRADNYA H., FAYZULLIN ROBERT R., KHASKIN EUGENE, LAPOINTE SÉBASTIEN, KHUSNUTDINOVA JULIA R.: "Triboluminescence of a new family of Cu I –NHC complexes in crystalline solid and in amorphous polymer films", CHEMICAL SCIENCE, ROYAL SOCIETY OF CHEMISTRY, UNITED KINGDOM, vol. 11, no. 39, 14 October 2020 (2020-10-14), United Kingdom , pages 10814 - 10820, XP055887496, ISSN: 2041-6520, DOI: 10.1039/D0SC04442C
- "Functional Tactile Sensors - Materials, Devices and Integrations", 1 January 2021, WOODHEAD PUBLISHING, US, ISBN: 978-0-12-820633-1, article DENGFENG PENG, SICEN QU: "6 - Mechanoluminescent materials for tactile sensors", pages: 91 - 112, XP009544187, DOI: 10.1016/B978-0-12-820633-1.00007-3

## Description

### [Technical Field]

The present invention relates to an amorphous triboluminescent material that emits light in response to mechanical action, a method for producing the same and a mechanoresponsive sensor using the same. More specifically, the present invention relates to a stimuli-induced glowing material such as stimuli-induced glowing fibers, dyes, particles, paste, and films.

### [Background Art]

Triboluminescent, or mechanoluminescent materials that produce light emission in response to mechanical action (fracture, crushing, rubbing, etc) are promising materials for utilization in mechanoresponsive sensors, light emitting devices via direct conversion of mechanical action to light, etc (for example, NPL 1)^{[1]}. While many solid crystalline materials are known to be triboluminescent, some potential drawbacks include necessity of the presence of crystalline phase. Widely used europium-containing triboluminescent solid materials or polymers also have potential limitations due to the usage of expensive europium-containing compounds. Limited number of biocompatible triboluminescent materials also limit their utilization in healthcare and health monitoring devices, stimuli-sensors in biology, fashion items.

Although examples of photoluminescent compounds that show triboluminescence in polymer films are known, nature of observed phenomenon is not clear and the presence of crystalline phase is not always confirmed. Several examples are reported for Eu-containing polymer films (for example, NPL 2)^{[2]}, however, no studies are reported that could confirm the absence or presence of microcrystalline phase. Some semiconducting particles such as metal doped zinc sulfide or rare-earth doped ceramics showing TL in polymers have been developed, however, these systems require trapped electron in the band structure to cause TL. Other examples of triboluminescence in polymers involve polymer fracture or the use of specialized equipment to observe inert gas plasma generation via triboelectrification (NPL 3)^{[3]}. The previous study of Cu complex-containing polymer films reported in the literature shows that the presence of microcrystalline phase is required to observe triboluminescence (NPL 4)^{[4]}, and no triboluminescence is seen in amorphous state.

JP H10 130639 A describes a mechanoluminescent material obtained by using a europium complex film obtained by reacting a europium salt with a thiophene derivative and a phenanthroline derivative in the presence of sodium hydroxide. In the general formula (1) shown below, R1 to R3 represent hydrogen or an optionally substituted hydrocarbon group, whereby the hydrocarbon group includes an alkyl group, a cycloalkyl group, an aryl group, and an aralkyl group. The alkyl group includes a lower alkyl group having 1 to 6 carbon atoms, preferably 1 to 4 carbon atoms. The cycloalkyl group includes a cyclohexyl group. Examples of the aryl group include a phenyl group or a tolyl group. Examples of aralkyl groups include benzyl groups and phenethyl groups. The substituent may include an oxygen-containing group such as a sulfonic acid group, a carboxyl group, a hydroxyl group, an acyl group, an alkoxycarbonyl group or an acyloxy group. The material is a polymer film with a thickness of 20 µm or less containing the europium complex represented by formula (1). 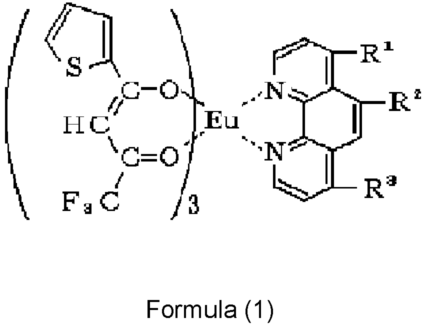 Anil Incel et al., Integration of Triboluminescent EuD4TEA Crystals to Transparent Polymers: Impact Sensor Application, ACS Applied Materials & Interfaces, Vol. 9, No. 7, 9 February 2017, pages 6488 to 6496 , deals with lanthanide-based organometallic materials as triboluminescent materials that can show bright emission when a mechanical force is applied. Described are micrometer-sized europium tetrakis (dibenzoylmethide) triethylammonium (EuD₄TEA) crystals which are synthesized and integrated with various transparent polymers (PMMA, PS, PVDF, and PU) using two approaches: (i) blending and (ii) surface impregnation. In the former method, the crystalline particles were molecularly dissolved; therefore, a TL response cannot be achieved. More than 10 wt % TL crystals in the composite is needed to obtain TL signals. However, TL signal was achieved at 2.5 wt % when a composite was prepared by the latter approach. TL intensity shows exponential decay with consecutive mechanical action. The TL emission of PU-based surface impregnated composite expires with long-lived emission, and maximum TL response with respect to applied force was measured between 2.45 and 42.0 N.

Yasuchika Hasegawa, Photofunctional Lanthanoid Complexes, Coordination Polymers, and Nanocrystals for Future Photonic Applications, Bulletin of the Chemical Society of Japan, Vol. 87, No. 10, 15 October 2015, pages 1029 to 1057, introduces lanthanoid complexes, coordination polymers, and nanocrystals with photofunctional properties. It is pointed out that to maintain the effective emission of Nd(III), Sm(III), Eu(III), Tb(III), and Yb(III) ions in organic media, the coordination sphere of the lanthanoid ions should consist of strong, bulky, and asymmetric ligands with low vibrational frequencies, There are three criteria for luminescence: 1) suppression of vibrational relaxation, 2) prevention of nonradiative cross relaxation at diffusional collision, and 3) introduction of asymmetric coordination geometry for enhancing electric dipole transition. Lanthanoid coordination compounds with characteristic photosensitizing properties, photochromic properties, circularly polarized luminescence (CPL), metal ion sensing properties, solvent sensing properties, energy-conversion properties, thermostable properties, triboluminescent properties, and thermosensing properties are also described for the development of Photofunctional materials. Furthermore, the synthesis, photophysical magnetic, and magneto-optical properties of lanthanoid nanocrystals, EuO, EuS, and EuSe, are reported. The remarkable photophysical properties of nanoaggregates composed of EuS nanocrystals are presented. Photofunctional lanthanoid(III) complexes, coordination polymers, and nanocrystals are expected to open a frontier filed of materials science.

T. M. George et al, Bright red luminescence and triboluminescence from PMMA-doped polymer film materials supported by Eu3+-triphenylphosphine based β-diketonate and 4,5-bis(diphenylphosphino)-9,9-dimethylxanthene oxide, Journal of Photochemistry and Photobiology, Vol. 317, 1 February 2016, pages 88 to 99, disclose a β-diketonate ligand, i.e. 1-(4-(diphenylphosphino)phenyl)-4,4,5,5,5-pentafluoropentane-1,3-dione (DPPFH) which has been synthesized and utilized for the construction of an antenna complex of Eu³⁺ [EU(DPPF)₃(DDXPO)] in the presence of a chelating ligand, 4,5-bis(diphenylphosphino)-9,9-dimethylxanthene oxide (DDXPO). The developed Eu³⁺ compound has been characterized and the photophysical properties have been investigated. The designed Eu³⁺ complex displays bright red luminescence upon irradiation at the ligand-centered band at 375 nm with a quantum yield of 39 % in the solid-state. The ternary Eu³⁺ complex also exhibits brilliant triboluminescence in the daylight, which could be useful in the design of pressure and damage detection probes. In addition, the obtained Eu³⁺ complex was embedded into a PMMA matrix to form highly luminescent films having quantum yields as high as 45 to 50 %. These plastic materials display enhanced thermal stability as compared to parent compound. The ground state coordination geometry of the typical Eu³⁺ complex was calculated using the Sparkle/RM1 model. There was an excellent agreement between the experimental and theoretically predicated photophysical data, attesting the efficacy of the theoretical approach implemented in the LUMPAC software (http://lumpac.pro.br).

Ayumu Karimata et al., Triboluminescence of a new family of Cu'-NHC complexes in crystalline solid and in amorphous polymer films, Chemical Science, Vol. 11, No. 39, 14 October 2020, pages 10814 to 10820, disclose triboluminescent compounds that generate emission of light in response to mechanical stimulus which can be used in the development of "smart materials" and damage sensors. Among triboluminescent metal complexes, rare earth europium and terbium complexes are most widely used, while there is no systematic data on more readily available and inexpensive Cu complexes. A new family of photoluminescent Cu-NHC-complexes showing bright triboluminescence (TL) in the crystal state visible in ambient indoor light under air is reported. When these complexes are blended into amorphous polymer films even at small concentrations, TL is easily observed. Observation of TL in polymer films overcomes the limitation of using crystals and opens up possibilities for the development of mechanoresponsive coatings and materials based on inexpensive metals such as Cu. The results may also have implications for the understanding of the TL effect's origin in polymer films.

### [Citation List]

### [Non Patent Literature]

[NPL 1]
   J.-C. G. Bunzli, K.-L. Wong, Journal of Rare Earths 2018, 36, 1-41.
[NPL 2]
   R. S. Fontenot, W. A. Hollerman, K. N. Bhat, M. D. Aggarwal, B. G. Penn, Polymer Journal 2014, 46, 111-116.
[NPL 3]
   K. Nakayama, R. A. Nevshupa, Journal of Tribology 2003, 125, 780-787.
[NPL 4]
   A. Incel, C. Varlikli, C. D. McMillen, M. M. Demir, The Journal of Physical Chemistry C 2017, 121, 11709-11716.

### [Summary of Invention]

### [Technical Problem]

As described above, conventionally reported triboluminescent materials are limited to those using a specific luminophore, those having a crystal structure, and those in a specific electronic state. The object of the invention is to provide a new triboluminescent material that can apply a wide range of luminophores blended in varied polymers.

In this situation, the present inventors have performed investigations with the aim of developing a new amorphous triboluminescent material.

### [Solution to Problem]

The present application includes the following inventions:
A material that generates emission of light in response to mechanical stimulus, comprising a luminophore and an amorphous polymer, wherein the luminophore is an organic compound containing no metal element.

In the present application, the term "amorphous triboluminescent material" is defined as a material comprising an amorphous layer that generates emission of light in response to mechanical stimulus without excitation by light such as ultraviolet, infrared ray and without application of electric current. The amorphous triboluminescent material may be in the form of films, fibers, particles, pastes, slurries, dyes, etc. The term "amorphous" referred herein means a state formed by blending the luminophore molecules and the polymer molecules without forming crystals having a regular spatial arrangement. In the present application, amorphous is confirmed by powder X-ray diffraction method and emission microscopy imaging. The mechanical stimuli include mechanical stress, strain and deformation, and they are derived from a mechanical action such as compression, tension, tensile strength, impact, sharing, bending, abrasion, torsion, scratching, crushing, rubbing, grinding and ultrasound. The amorphous triboluminescent materials do not need irradiation of excitation light, such as UV light, from the outside to emit light

The term "luminophore" in the present application is defined as a substance that generates emission of light including fluorescence, phosphorescence, long persistent emission, caused by irradiation of light. The light emission generated in the amorphous triboluminescent material is derived from the luminophore. In a preferred embodiment of the present application, the luminophore does not contain a polymer structure. In another preferred embodiment of the present application, the molecular weight of the luminophore is less than 1000.

The term "polymer" in the present application is defined as a compound having a unit recurring at least three times, and the term "polymer structure" in the present application is defined as a structure having a unit recurring at least three times. The "unit recurring" referred to here is a structure derived from a monomer as a synthetic raw material for the polymer.

In one embodiment of the present application, the amorphous triboluminescent material comprises a mixed layer of a luminophore and a polymer. In another embodiment of the present application, the amorphous triboluminescent material comprises a polymer layer containing an amorphous polymer and a light-emitting body impregnated in the polymer layer. In this case, preferably, a luminophore is impregnated in the vicinity of the surface of the polymer layer to form a light-emitting region.

The luminophore of the amorphous triboluminescent material is free from metal.

The luminophore may be composed of two or more atoms selected from the group consisting of a hydrogen atom, a carbon atom, a nitrogen atom, an oxygen atom, a sulfur atom and a halogen atom.

Preferably, in the amorphous triboluminescent material the luminophore is not attached to the polymer covalently.

The luminophore of the amorphous triboluminescent material preferably has a condensed polycyclic structure in which three or more rings are condensed. Furthermore preferably, at least one of the luminophore and the polymer of the amorphous triboluminescent materialr is biocompatible.

Examples of the luminophore having biocompatibility include a luminophore having a ring skeleton common to a biological material.

Preferably, the amorphous triboluminescent material comprises an amorphous triboluminescent layer containing the luminophore and the polymer, and a luminophore-free layer containing a polymer and not containing a luminophore. In the amorphous triboluminescent material the luminophore-free layer can be laminated on the amorphous triboluminescent layer.

The polymer of the amorphous triboluminescent layer and the polymer of the luminophore-free layer of the amorphous triboluminescent material can be different kind of polymers.

The amorphous triboluminescent layer of the amorphous triboluminescent material can be entirely covered with the luminophore-free layer.

Alternatively, a part of the amorphous triboluminescent layer can be covered with the luminophore-free layer.

The invention also provides a method for generating light emission in the amorphous triboluminescent material whereby the luminophore-free layer is laminated on the amorphous triboluminescent layer the method comprising applying mechanical action to the surface of the luminophore-free layer on the opposite side of the amorphous triboluminescent layer to generate light emission in the amorphous triboluminescent layer.

The invention further refers to a method for producing a film comprising a material that emits light in response to mechanical action, whereby the method comprises coating a solution of a luminophore which is organic compound containing no metal element and an amorphous polymer on a base material, and drying the coated solution, or
spreading a solid mixture of a luminophore which is organic compound containing no metal element and an amorphous polymer into a film.

The solid mixture of a luminophore and a polymer may be free from a solvent. In the present application, painting solutions, solutions containing solids, suspensions, dispersions, pastes, slurries and colloidal solutions can be used to produce an amorphous triboluminescent film.

In addition, the present invention refers to a mechanoresponsive sensor, fiber, film or dye comprising the above discussed amorphous triboluminescent material.

In the present application, the term "mechanoresponsive sensor" is defined as a device that detects mechanical stimulus or mechanical damage and responds to it.

### [Brief Description of Drawings]

[Fig. 1]

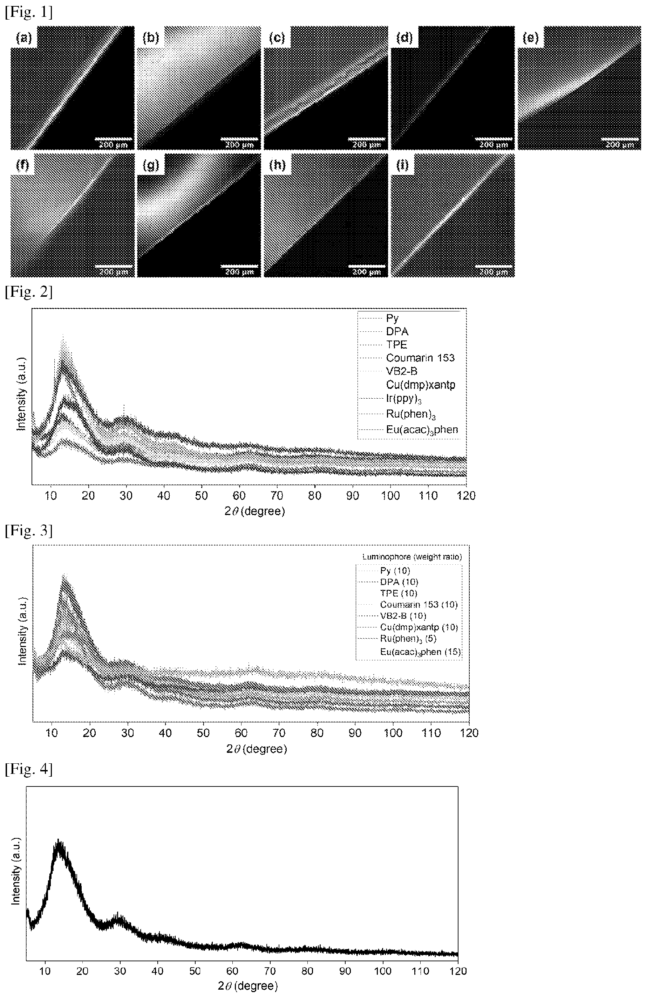

   Fig 1 is fluorescence microscopy images of PMMA films containing 2 or 3 wt% of (a) Py (Iₑₓ = 380, Iₑₘ = 447), (b) DPA (Iₑₓ = 405, Iₑₘ = 522), (c) TPE (Iₑₓ = 380, Iₑₘ = 447), (d) Coumarin 153 (Iₑₓ = 405, Iₑₘ = 522), (e) VB2-B (Iₑₓ = 488, Iₑₘ = 522), (f) Cu(dmp)Xantp (not according to the present invention) (Iₑₓ = 405, Iₑₘ = 522), (g) Ir(ppy)₃ (not according to the present invention) (Iₑₓ = 405, Iₑₘ = 522), (h) Ru(phen)₃ (not according to the present invention)(Iₑₓ = 405, Iₑₘ = 617), and (i) Eu(acac)₃phen (not according to the present invention)(Iₑₓ = 405, Iₑₘ = 617). Iₑₓ is excitation wavelength (nm), and Iₑₘ is monitored emission wavelength.
[Fig. 2]
   Fig. 2 is PXRD patterns of PMMA films including 2 or 3 wt% of luminophores.
[Fig. 3]
   Fig. 3 is PXRD patterns of PMMA films containing 5, 10, or 15 wt% of luminophores.
[Fig. 4]
   Fig. 4 is a PXRD pattern of PMMA film without luminophore.
[Fig. 5]

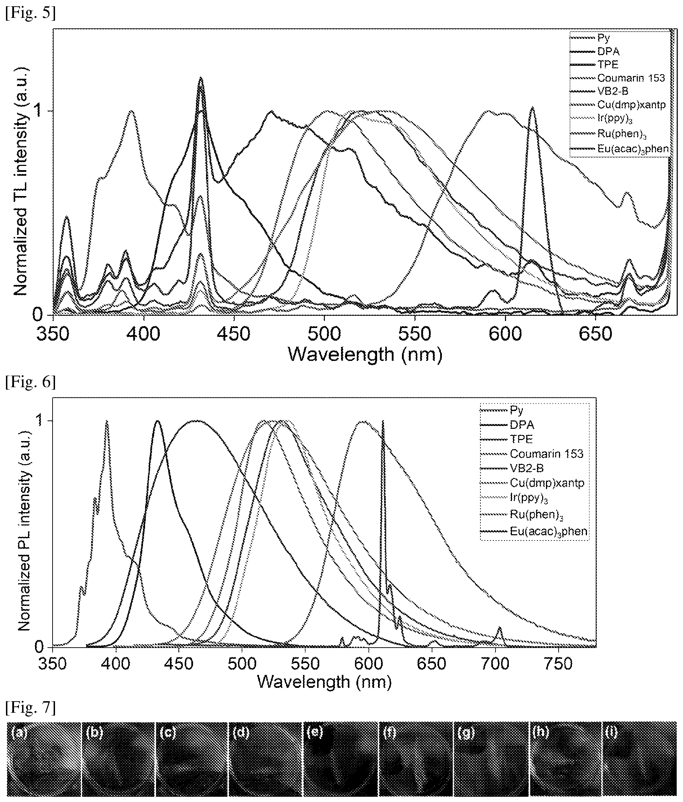

   Fig. 5 is normalized TL spectra of luminophores (1 wt%) blended in PMMA under Ar.
[Fig. 6]
   Fig. 6 is PL spectra of luminophores (1 wt%) in PMMA under N₂ gas flow.
[Fig. 7]
   Fig. 7 is images of TL of PMMA films containing 10 wt% of (a) Py (b) DPA (c) TPE (d) Coumarin 153 (e) VB2-B (f) Cu(dmp)Xantp (not according to the present invention), and (g) 3 wt% of Ir(ppy)₃ (not according to the present invention) (h) 5 wt% of Ru(phen)₃ (not according to the present invention), and (i) 15wt% of Eu(acac)₃phen (not according to the present invention). The films were rubbed with a glass rod under Ar.
[Fig. 8]

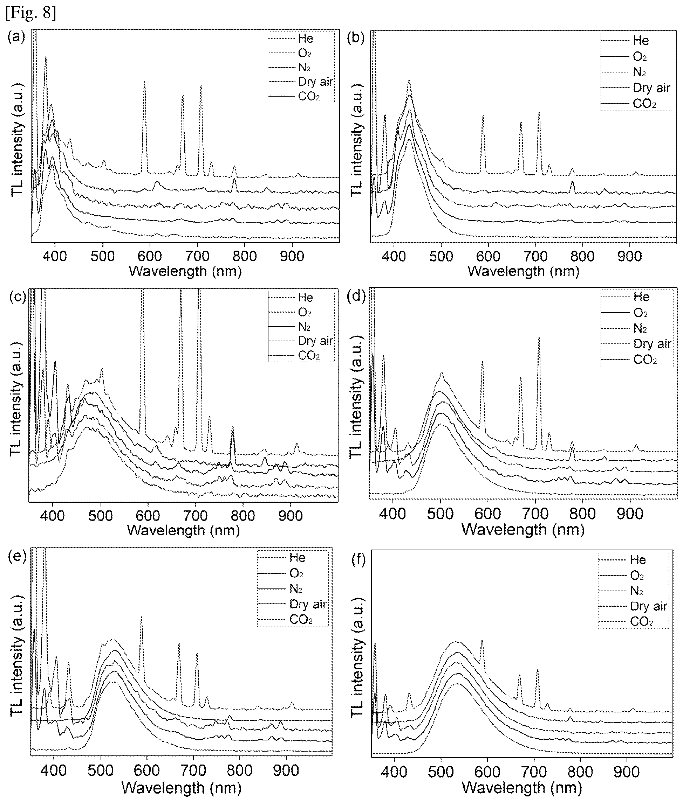

   Fig. 8 is TL spectra of (a) Py (2 wt%) (b) DPA (2 wt%), (c) TPE (2 wt%), (d) Coumarin 153 (3 wt%), (e) VB₂-B (2 wt%) in PMMA in different gas, and (f) Cu(dmp)Xantp (3 wt%) (not according to the present invention).
[Fig. 9]

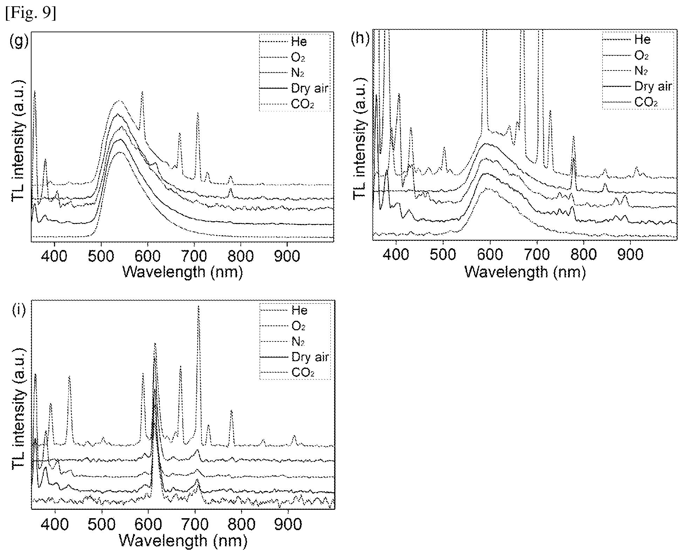

   Fig. 9 is TL spectra of (g) Ir(ppy)₃ (2 wt%) (not according to the present invention), (h) Ru(phen)₃ (2 wt%) (not according to the present invention), and (i) Eu(acac)₃phen (3 wt%) (not according to the present invention) in PMMA in different gas.
[Fig. 10]

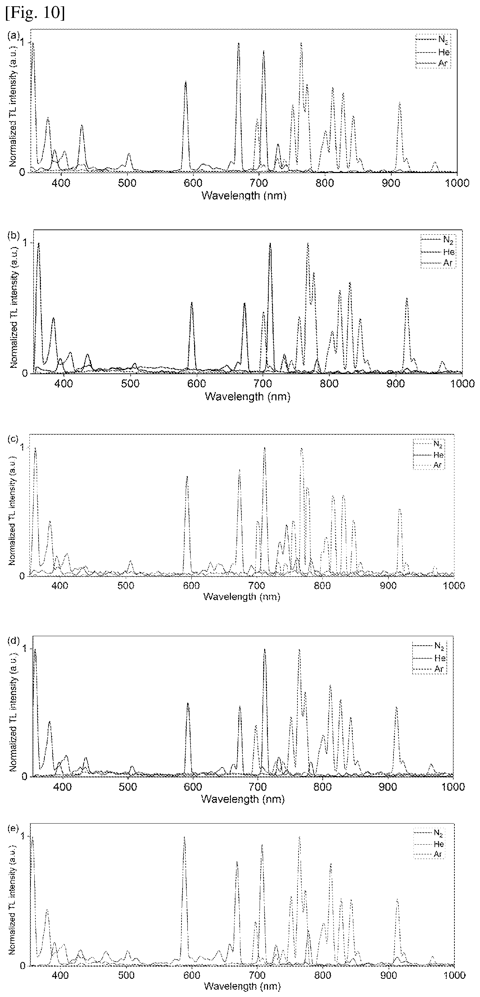

   Fig. 10 is normalized TL spectra of (a) PMMA (b) PS (c) PCL (d) PBAC and (e) PVC under N₂, He, and Ar atmosphere.
[Fig. 11]

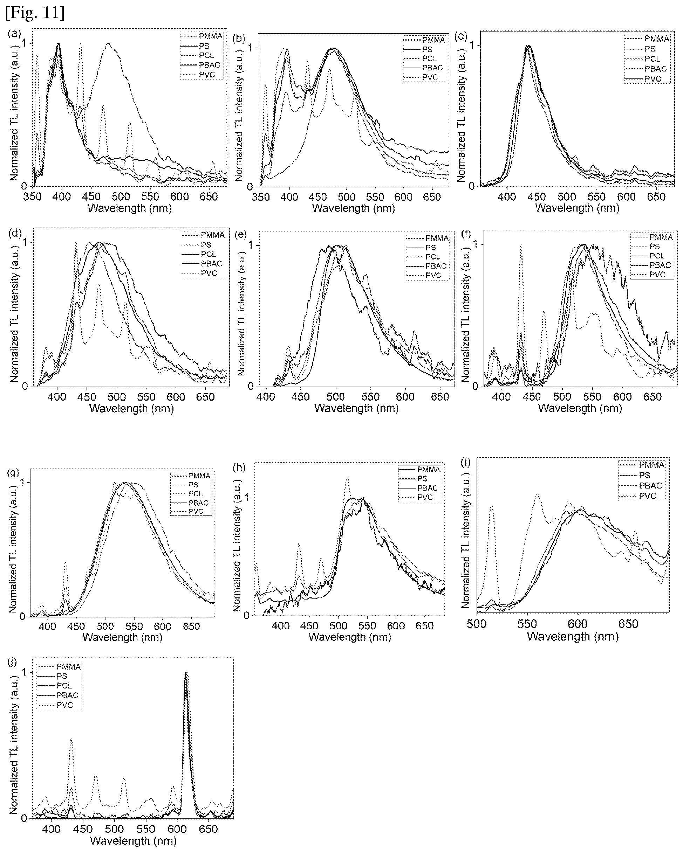

   Fig. 11 is TL spectra of (a) Py (2 wt%) (b) Py (10 wt%) (c) DPA (2 wt%), (d) TPE (2 wt%), (e) Coumarin 153 (3 wt%), (f) VB₂-B (2 wt%) (g) Cu(dmp)Xantp (3 wt%) (not according to the present invention), (h) Ir(ppy)₃ (2 wt%) (not according to the present invention), (i) Ru(phen)₃ (2 wt%) (not according to the present invention), and (j) Eu(acac)₃phen (3 wt%) (not according to the present invention) in various polymers obtained by rubbing the surface with glass rod under Ar.
[Fig. 12]

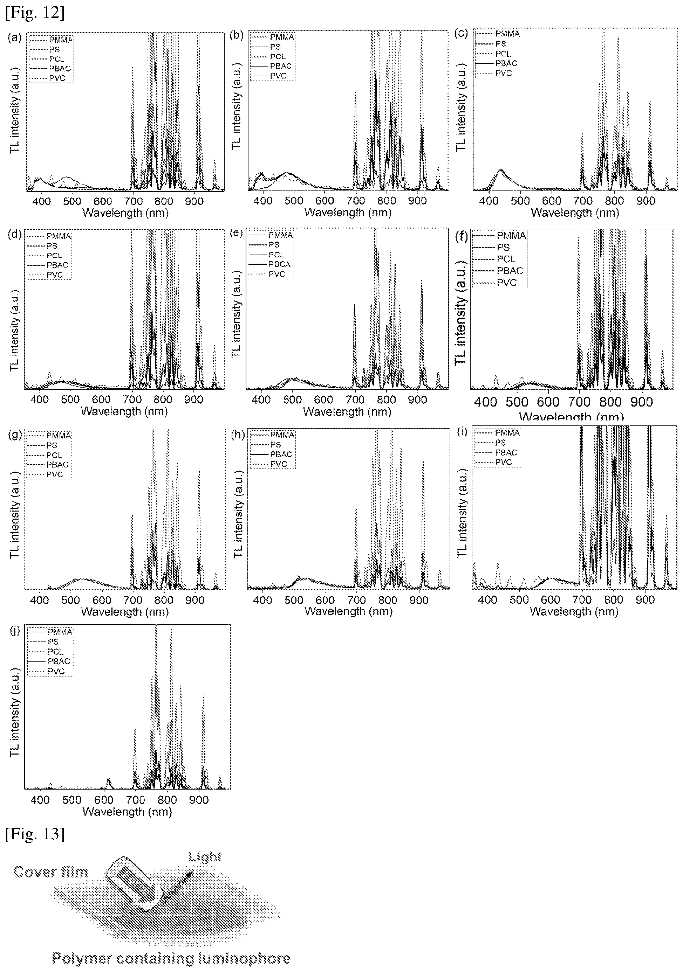

   Fig.12 is full range TL spectra of (a) Py (2 wt%) (b) Py (10 wt%) (c) DPA (2 wt%), (d) TPE (2 wt%), (e) Coumarin 153 (3 wt%), (f) VB₂-B (2 wt%) (g) Cu(dmp)Xantp (3 wt%) (not according to the present invention), (h) Ir(ppy)₃ (2 wt%) (not according to the present invention), (i) Ru(phen)₃ (2 wt%) (not according to the present invention), and (j) Eu(acac)₃phen (3 wt%) (not according to the present invention) in various polymers obtained by rubbing the surface with glass rod under Ar.
[Fig. 13]
   Fig. 13 is an illustration of TL of luminophores blended in polymer generated by rubbing the cover film.
[Fig. 14]

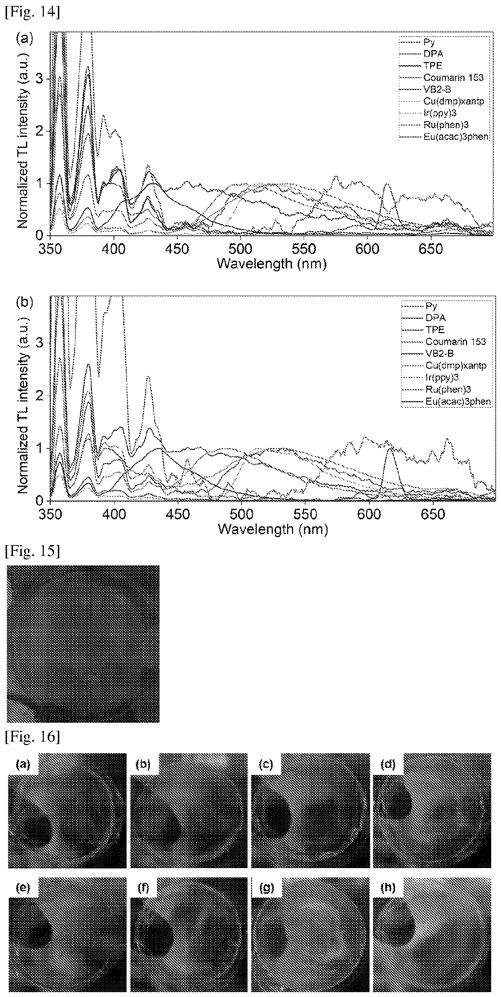

   Fig. 14 is normalized TL spectra of 1 wt % of luminophores in (a) PMMA and (b) PS under dry air. The PMMA and PS containing luminophores were covered with PVC film (thickness: ca. 20 µm) and rubbed with glass rod over the PVC cover film.
[Fig. 15]
   Fig. 15 is images of TL of 2 wt% of Ir(ppy)₃ (not according to the present invention) in PS under flow of dry air in a glove bag. The PS film was placed on a glass Petri dish and covered with PVC film (thickness: ca. 20 µm) and rubbed over the PVC film using a rubber rod.
[Fig. 16]
   Fig. 16 is images of TL of PS films containing 1 wt% of (a) Py (b) DPA (c) TPE (d) Coumarin 153 (e) VB2-B (f) Cu(dmp)Xantp (not according to the present invention) (g) Ir(ppy)₃ (not according to the present invention) (h) Eu(acac)₃phen (not according to the present invention). The PS films were covered with PVC films (thickness: ca. 20 µm) and were stroked over the PVC using a silicone rubber under Ar. Exposure time of camera is 5 seconds. The PS and PVC are hold by a finger on window of glove box.
[Fig. 17]

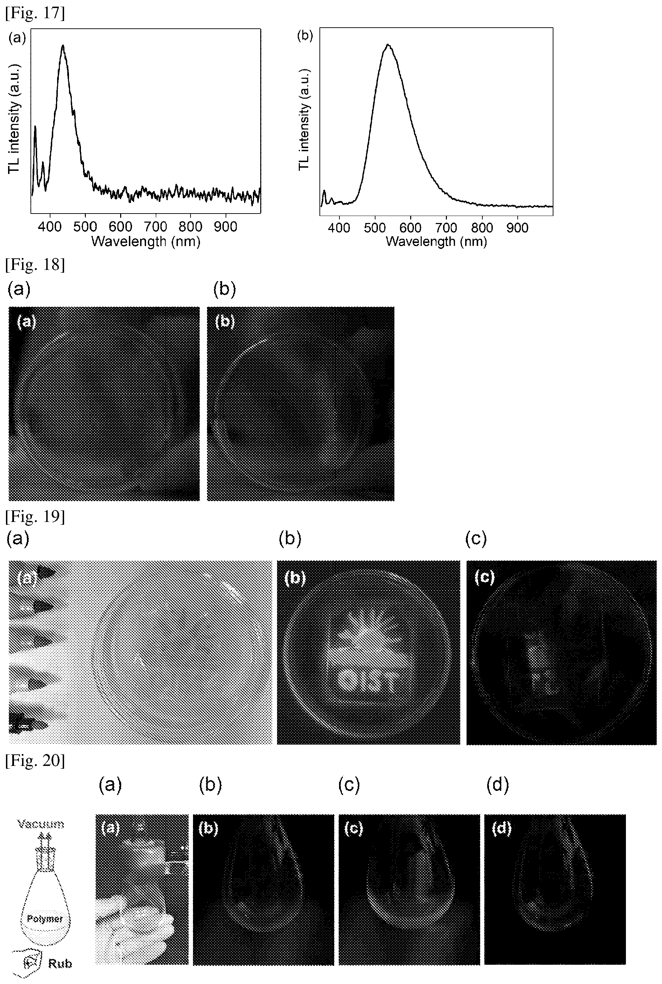

   Fig. 17 is TL spectra of PBAC films containing 3 wt% of (a) DPA and (b) Cu(dmp)xantp (not according to the present invention) under humid air at 23 °C, (Relative humidity: 34%). The films were rubbed by a glass tube containing an optic fiber probe.
[Fig. 18]
   Fig. 18 is photographs of TL of PBAC films containing 10 wt% of (a) DPA and (b) Cu(dmp)xantp (not according to the present invention) under humid air at 24 °C, (Relative humidity: 40%). The films were rubbed by a silicone rubber rod on a glass Petri dish. The exposure time of the camera is 5 seconds.
[Fig. 19]
   Fig. 19 is photograph of a painting drawn by permanent fluorescent markers on PS film on a glass Petri dish fixed by a Scotch tape, which was used for TL performance experiments. (b) The painting under UV lamp. (c) TL of the painting in a glove box generated by rubbing the PVC covering film using a silicone rubber rod. (The exposure time of the camera is 5 seconds) All of color components of fluorescent marker generate emission. Humidity is zero, confirmed by a sensor in the glovebox.
[Fig. 20]
   Fig. 20 is Illustration of generation of TL of the polymer containing a luminophore in a vacuumed glass flask. (a) Photograph of the glass flask, in which a PMMA film is placed, before rubbing. Photographs of TL of PMMA films containing 10 wt% of (b) DPA (c) Cu(dmp)xantp (not according to the present invention) under vacuum in a round-bottom flask, which was generated by rubbing the bottom of the flask with a rubber glove. (d) The flask in a dark without rubbing. Exposure time of the camera is 5 seconds. It is humid air.

### [Description of Embodiments]

The contents of the invention will be described in detail below. The invention is not limited to the embodiments and the examples described below. In the present specification, a numerical range expressed by "from X to Y" means a range including the numerals X and Y as the lower limit and the upper limit, respectively.

### Amorphous triboluminescent material

The amorphous triboluminescent material of the invention comprises a luminophore which is an organic compound containing no metal element and an amorphous polymer. In one embodiment of the invention, the luminophore is not attached to the polymer covalently. In a preferred embodiment of the invention, the amorphous triboluminescent material comprises at least one amorphous triboluminescent layer. The amorphous triboluminescent layer is an amorphous layer comprising the luminophore which is an organic compound containing no metal element and an amorphous polymer and generating light emission in response to a mechanical action to the amorphous triboluminescent material.

Hereinafter, each component comprised in the amorphous triboluminescent material of the invention will be described.

### luminophore

The luminophore which is an organic compound containing no metal element may be a fluorescent material, a delayed fluorescent material, a phosphorescent material, or a long persistent luminescent material using semiconducting particles. The luminophore is an organic compound containing no metal element. For example, the luminophore is composed of two or more atoms selected from the group consisting of a hydrogen atom, a carbon atom, a nitrogen atom, an oxygen atom, a sulfur atom and a halogen atom. A luminophore free from a metal element is easily dispersed in a polymer. In one embodiment of the invention, the luminophore is free from an N-heterocyclic carbene ligand and a pyridinophane ligand.

Examples of the luminophore include an aromatic compound or a heteroaromatic compound. The term "aromatic compound" referred herein means a compound containing at least one aromatic ring. The term "heteroaromatic compound" referred herein means a compound containing at least one heteroaromatic ring. The aromatic ring and the heteroaromatic ring may be a monocyclic ring and may be a fused ring having a condensed polycyclic structure. Examples of the heteroatom constituting the heteroaromatic ring include nitrogen atom, oxygen atom, and sulfur atom.

Examples of the aromatic compound as the luminophore include a condensed polycyclic aromatic compound having a polycyclic aromatic ring in which two or more benzene rings are condensed, and a compound having a structure in which two or more aromatic rings (for example, a benzene ring) are linked by a π-conjugated linking group. At least one hydrogen atom each of the aromatic ring and the π-conjugated linking group may be substituted with a substituent. Specific examples of the ring skeleton of the condensed polycyclic aromatic compound include an anthracene ring and a pyrene ring. The π-conjugated linking group is a linking group that forms a π-conjugated system with a double bond of the aromatic rings, and examples thereof include an ethenylene group, a 1,3-butadiene-1,4-diyl group, and a linking group having a polyene structure.

Examples of the substituent for the aromatic ring and the π-conjugated linking group include an alkyl group (preferably having 1 to 50 carbon atoms), an alkenyl group (preferably having 1 to 50 carbon atoms), an alkynyl group (preferably having 1 to 50 carbon atoms), an alkoxy group (preferably having 1 to 50 carbon atoms), a nitro group, a cyano group, a halogen atom, a hydroxy group, a thiol group, an acyl group (preferably having 1 to 50 carbon atoms), a silyl group (preferably having 1 to 50 carbon atoms), an amino group, an aldehyde group, an isocyanate group, a triazolyl group, an aryl group (preferably having 6 to 50 carbon atoms), a heterocycloalkyl group (preferably having 3 to 50 carbon atoms), and a heteroaryl group (preferably having 3 to 50 carbon atoms). These exemplified groups may be further substituted. Such further substituted groups include, for example, an aralkyl group, a haloalkyl group, and an alkoxysilyl group. The substituents for the aromatic ring and the π-conjugated linking group may have a carboxyl bond, a carboxyamide bond, an ester bond, an amide bond, a sulfide bond, a disulfide bond and the like.

Preferred examples of the aromatic compound as the luminophore include the compounds having a structure represented by any of the following formulae. At least one hydrogen atom contained in the following structure may be substituted with a substituent. For preferred ranges of the substituent and specific examples thereof, the descriptions for the substituent for the aromatic ring and the π-conjugated linking group above may be referenced.

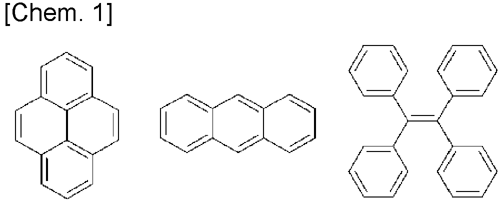

Preferred examples of the heteroaromatic compound as the luminophore include the compounds having a structure represented by any of the following formulae. At least one hydrogen atom contained in the following structure may be substituted with a substituent. For preferred ranges of the substituent and specific examples thereof, the descriptions for the substituent for the aromatic ring and the π-conjugated linking group above may be referenced.

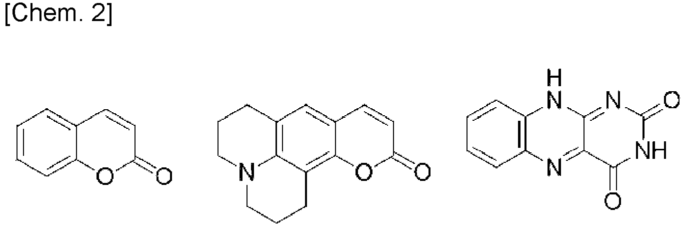

More preferred examples of the heteroaromatic compound as the luminophore include a compound represented by the following formula (1) or (2).

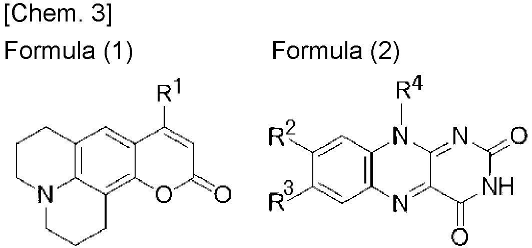

In the formula (1), R¹ represents a fluoroalkyl group. In the formula (2), R² and R³ each independently represent an alkyl group, R⁴ represents an alkyl group substituted with an alkylcarbonyloxy group. R² and R³ may be the same as or different from each other. The compounds represented by the formula (2) have high biocompatibility as they have the ring structure of vitamin B2.

In the formula (1), the fluoroalkyl group for R¹ may be a perfluoroalkyl group in which all hydrogen atoms of the alkyl group are substituted with a fluorine atom, or a partially fluoroalkyl group in which at least one but not all of the hydrogen atoms of the alkyl group are substituted with a fluorine atom. The fluoroalkyl group may be linear, branched or cyclic. The fluoroalkyl group preferably has from 1 to 20 carbon atoms, more preferably from 1 to 10 carbon atoms, and further preferably from 1 to 5 carbon atoms. Specific examples of the fluoroalkyl group include a perfluoromethyl group (a trifluoromethyl group), a perfluoroethyl group and a perfluoropropyl group.

In the formula (2), The alkyl group for R² and R³ may be linear, branched or cyclic. The alkyl group preferably has from 1 to 20 carbon atoms, more preferably from 1 to 10 carbon atoms and further preferably from 1 to 5 carbon atoms. Specific examples of the alkyl group include a methyl group (Me), an ethyl group, a n-propyl group (n-Pr), an isopropyl group (i-Pr), a n-butyl group, an isobutyl group, a sec-butyl group and a tert-butyl group (t-Bu).

The alkyl group substituted with the alkylcarbonyloxy group for R⁴ preferably has a structure represented by the following formula.

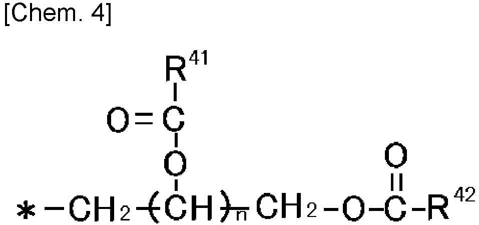

In the formula, R⁴¹ and R⁴² each independently represent an alkyl group, n represents an integer of 0 or more, and * represents a bond position to the nitrogen atom. R⁴¹ and R⁴² may be the same as or different from each other. When n is 2 or more, the two or more R⁴¹s may be the same as or different from each other. For descriptions for the alkyl group, the preferred ranges thereof, and specific examples thereof, the descriptions for the alkyl group for R² and R³ above may be referenced. n is preferably from 0 to 8, more preferably from 1 to 6, and further preferably from 2 to 4.

Specific examples of the luminophore are shown below. However, the luminophore capable of being used in the invention is not construed as being limited to the specific examples.

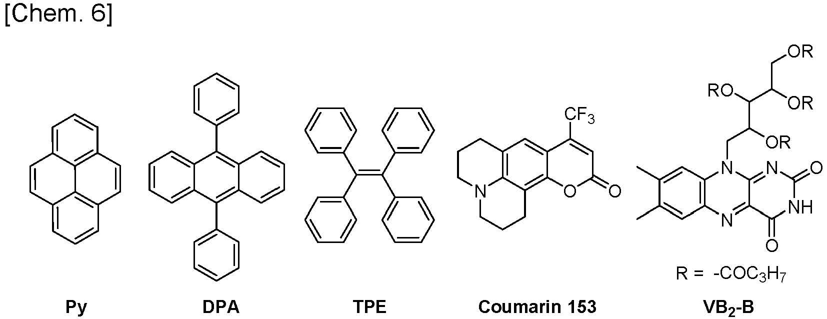

The luminophore contained in the amorphous triboluminescent material may be one kind or two or more kinds.

### Polymer

The polymer has the function as a matrix material for the luminophore. Further, in the amorphous triboluminescent material, the polymer of the amorphous triboluminescent layer is an amorphous polymer.

Examples of the amorphous polymer include a polyacrylate, a polymethacrylate, a polystyrene, a poly (ε-caprolactone), a polycarbonate (a poly (bisphenol A) carbonate), a polyvinyl chloride, a polyurethane, a polyester, a polyamide, a polylactone, a polyalkyleneoxide, a polysiloxane, a polydimethylsiloxane, a polylactide, a polyolefin, a polyisobutylene, a polyamideimide, a polybutadiene, an epoxy resin, a polyacetylene, and a vinyl polymer. An amorphous polymer selected from these polymers may be used in the triboluminescent amorphous layer. Preferred examples of the amorphous polymer include polyacrylate, polymethacrylate, polystyrene, poly (ε-caprolactone), polycarbonate (poly (bisphenol A) carbonate), and polyvinyl chloride. Among these, the poly (ε-caprolactone) has high biocompatibility. The polyacrylate is preferably a polyalkylacrylate, and the polymethacrylate is preferably a polyalkylmethacrylate. The number of carbon atoms of the alkyl group of the polyalkyl acrylate and the polyalkyl methacrylate is preferably from 1 to 40, more preferably from 1 to 20, and further preferably from 1 to 6. The molecular weight of the polymer is not particularly limited and may be selected from, for example, the range of 1000 to 300000, more preferably 5000 to 50000. The polymer contained in the amorphous triboluminescent material may be one kind or two or more kinds.

The polymer used in the invention may or may not have a photoluminescent moiety in the repeating unit of the polymer. The photoluminescent moiety may show fluorescence, phosphorescence, thermally activated delayed fluorescence, or long-persistent luminescence. In one embodiment of the invention, the polymer in the amorphous triboluminescent material does not have a photoluminescent moiety.

### Amount ratio of luminophore to polymer

The amount of the luminophore in the amorphous triboluminescent material is preferably 0.001 % by weight or more, more preferably 0.01 % by weight or more, further preferably 0.1 % by weight or more, preferably 30 % by weight or less, more preferably 10 % by weight or less, further preferably 5 % by weight by weight or less, each based on the total weight of the polymer.

### Other components of amorphous triboluminescent material

The amorphous triboluminescent material of the invention may consist of the luminophore and the polymer only or may further comprises other components.

### Amorphous triboluminescent material layer

The amorphous triboluminescent material of the invention may have a single-layer structure with only one layer (the amorphous triboluminescent layer) containing the luminophore and the amorphous polymer, or may have a multi-layer structure with two or more layers. In the case where the amorphous triboluminescent material has a multi-layer structure, all layers of the multi-layer structure may be an amorphous triboluminescent layer containing the luminophore and the amorphous polymer, or at least one layer is an amorphous triboluminescent layer containing the luminophore and the amorphous polymer and at least one layer is a luminophore-free layer containing a polymer and not containing a luminophore. In a preferred embodiment of the invention, the luminophore-free layer is laminated on the amorphous triboluminescent layer. In a more preferred embodiment of the invention, the luminophore-free layer (first luminophore-free layer), the amorphous triboluminescent layer, and the luminophore-free layer (second luminophore-free layer) are laminated in this order. In another preferred embodiment, the amorphous triboluminescent layer is entirely covered with the luminophore-free layer.

In the case where the amorphous triboluminescent material comprises the amorphous triboluminescent layer and the luminophore-free layer, the polymer contained in the amorphous triboluminescent layer and the polymer contained in the luminophore-free layer may be the same as or different from each other, but are preferably different. The polymer contained in the luminophore-free layer may be a crystalline polymer or an amorphous polymer. Examples of the crystalline polymer include a polyethylene, polypropylene (PE), a polyamide (PA), a polyacetal (POM), a polyethylene terephthalate (PET), a polybutylene terephthalate (PBT), a polyphenylene sulfide (PPS), a polyether ether ketone (PEEK), a liquid crystal polymer, and a polytetrafluoroethylene (PTFE). For examples of the amorphous polymer, the descriptions in the paragraph "Polymer" above may be referenced.

The thickness of the amorphous triboluminescent material may be appropriately determined depending on the application, and may be selected from the range of, for example, from 0.1 to 100000 µm, preferably from 1 to 10000 µm, for example from 1 to 1000 µm, or from 10 to 200 µm. In the case where the amorphous triboluminescent material has a multi-layer structure, the thickness of the amorphous triboluminescent layer is preferably from 0.1 to 1000 µm, more preferably from 0.1 to 100 µm, for example from 1 to 10 µm. The thickness of the luminophore-free layer is preferably from 0.1 to 10000 µm, more preferably from 1 to 1000 µm, for example from 5 to 50 µm.

### Method for generating light emission in amorphous triboluminescent material

The method of the invention is a method for generating light emission in the amorphous triboluminescent material in which the luminophore-free layer is laminated on the amorphous triboluminescent layer, and comprises:
applying mechanical action to the surface of the luminophore-free layer on the opposite side of the amorphous triboluminescent layer to generate light emission in the amorphous triboluminescent layer.

Another method is a method for generating light emission in the amorphous triboluminescent material, and comprises:
1) arranging a luminophore-free film comprising a polymer and not comprising a luminophore on an amorphous triboluminescent material comprising a luminophore and a polymer, and
2) applying mechanical action to the surface of the luminophore-free film on the opposite side of the amorphous triboluminescent material to generate light emission in the amorphous triboluminescent material.

For descriptions for the amorphous triboluminescent material, the amorphous triboluminescent layer and the luminophore-free layer, the corresponding descriptions for the amorphous triboluminescent material above may be referenced.

Examples of a mechanical action capable of being used in these methods include compression, tension, tensile strength, impact, sharing, bending, abrasion, torsion, scratching, crushing, rubbing, grinding and ultrasound.

In these methods, it is possible to generate light emission in the amorphous triboluminescent layer without directly applying a mechanical action to the amorphous triboluminescent layer (with indirectly applying a mechanical action to the amorphous triboluminescent layer). Therefore, damage to the amorphous triboluminescent layer due to the mechanical action is suppressed.

### Method for producing amorphous triboluminescent film

The amorphous triboluminescent material is preferably in the form of a film (amorphous triboluminescent film).

One method of the invention is a method of producing an amorphous triboluminescent film, and comprises coating a solution of a luminophore and a polymer and drying the coated solution.

For descriptions of the amorphous triboluminescent film, the luminophore, the polymer, and ratio of the amount of the luminophore to the polymer, the corresponding descriptions in the descriptions for the amorphous triboluminescent film above may be refenced.

Examples of the solvent capable of being used for the solution include aromatics such as benzene, toluene, xylene and chlorobenzene; ethers such as diethyl ether, dibutyl ether, tetrahydrofuran, 1,4-dioxane, dimethoxyethane and diethylene glycol dimethyl ether; esters such as methyl acetate, ethyl acetate, butyl acetate and ethyl propionate; ketones such as acetone, methyl ethyl ketone, methyl isobutyl ketone and cyclohexanone; hydrocarbons such as hexane, heptane, octane and nonane; halogens such as dichloromethane, chloroform and 1,2-dichloroethane; hydrocarbons; organic acids such as formic acid, acetic acid and propionic acid; polar solvents such as N, N-dimethylformamide, N, N-dimethylacetamide and N-methylpyrrolidone; water; and mixtures of these solvents. The selected solvent is used for preparing a solution.

A method for coating the prepared solution on a base material is not particularly limited, and a known wet process such as a casting method and a spin coating method may be appropriately selected and used.

The solution may be dried in air or in a reduced pressure atmosphere, and after being substantially dried in air, it may be further dried in reduced pressure atmosphere.

Another method of the invention is a method of producing a film, and comprises spreading a solid mixture of a luminophore which is an organic compound containing no metal and an amorphous polymer into a film.

The solid mixture here may be free from a solvent. Preferably, the solid mixture is a solid fluid mixture. Examples of the mixture include paints, pastes and slurries. In this another method, the solid mixture can be spread by, for example, printing, painting, soaking, and grinding like plastic colorants method.

For descriptions of the amorphous triboluminescent film, the luminophore, the polymer, and ratio of the amount of the luminophore to the polymer, the corresponding descriptions in the descriptions for the amorphous triboluminescent film above may be referenced.

### Method for producing amorphous triboluminescent material

The method for producing an amorphous triboluminescent material comprises:
impregnating a polymer film containing an amorphous polymer with a luminophore.

For descriptions for the amorphous polymer and the luminophore, the corresponding descriptions for the amorphous triboluminescent material above may be referenced.

Examples of the method of impregnating a polymer film with a luminophore include a method of immersing the polymer film in the liquid material containing a luminophore, and a method of supplying a liquid material containing the luminophore on the polymer film. The liquid material used in the impregnation may contain a solvent, a resin, and other known additives in addition to the luminophore. The liquid material including the luminophore may be applied on the polymer film using, for example, a writing instrument. As a result, it is possible to generate a light-emitting region having a planar shape such as a painting and a character. The writing instrument may be any one capable of supplying a liquid material containing the luminophore on the polymer film, and examples thereof include a fluorescent marker, a fluorescent fountain pen, and a writing brush.

### Mechanoresponsive sensor, fiber, film and dye

The mechanoresponsive sensor, fiber, or film of the invention comprises the amorphous triboluminescent material of the invention. The fiber or film may be used as a sensor or a glowing product.

For descriptions for the amorphous triboluminescent material of the invention, the descriptions for the amorphous triboluminescent material above may be referenced.

When the sensor of the invention receives a mechanical stimulus or mechanical damage, the material contained in the sensor emits light in response to the stimulus. Therefore, by observing the light emission or the change in the light emission color, it is possible to easily detect the mechanical stimulus or the mechanical damage received by the sensor. The material contained in the sensor may be in the form of fibers, particles, pastes or films.

The sensor of the invention may have a sensitive unit containing the material of the invention and a light receiving unit that detects light generated in the sensitive unit and converts it into an analog voltage or a digital signal.

### [Example 1]

Herein we developed a general approach to preparation of triboluminescent polymer films blended with a wide range of luminophores including biocompatible molecules. Wide range of polymer matrices can also be used. Light can be generated in these materials in response to rubbing, even in the absence of direct contact with the polymer (through the layer of another material). The response can be seen either under inert gas atmosphere or even under dry air and it does not require fracture or mechanical damage of the luminescent material. The preparation of the polymer films involves simple physical blending of the polymer with a luminophore and does not require covalent attachment.

To demonstrate utility of this method, we used nine representative luminophores that show fluorescence or phosphorescence: pyrene (**Py**), 9,10-diphenylanthracene (**DPA**), tetraphenylethene (**TPE**), 2,3,6,7-Tetrahydro-9-(trifluoromethyl)-1*H*,5*H*,11*H*-[1]benzopyrano[6,7,8-*ij*]quinolizin-11-one
**(Coumarin 153),** Vitamin B₂ butyrate (**VB₂-B**), (4,5-bis(diphenylphosphino)-9,9-dimethylxanthene)(2,9-dimethyl-1,10-phenanthroline) copper(I) hexafluorophosphate **(Cu(dmp)Xantp)** (not according to the present invention), *fac*-tris(2-phenylpyridinato-C²,*N*)iridium(III) (**Ir(ppy)₃**) (not according to the present invention), *fac*-Tris(1,10-phenanthroline)-ruthenium(II) bis(hexafluorophosphate) (**Ru(phen)₃**) (not according to the present invention, Tris(acetylacetonato)mono(1,10-phenanthroline)europium(III)
(**Eu(acac)₃(phen)**) (not according to the present invention (Scheme 1). Their derivatives are widely used in functional materials, organic light emitting diode (OLED), probes, and photo-redox catalysis. Among them, Py was investigated and reported in the literature to show no TL in crystal by grinding. 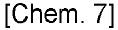 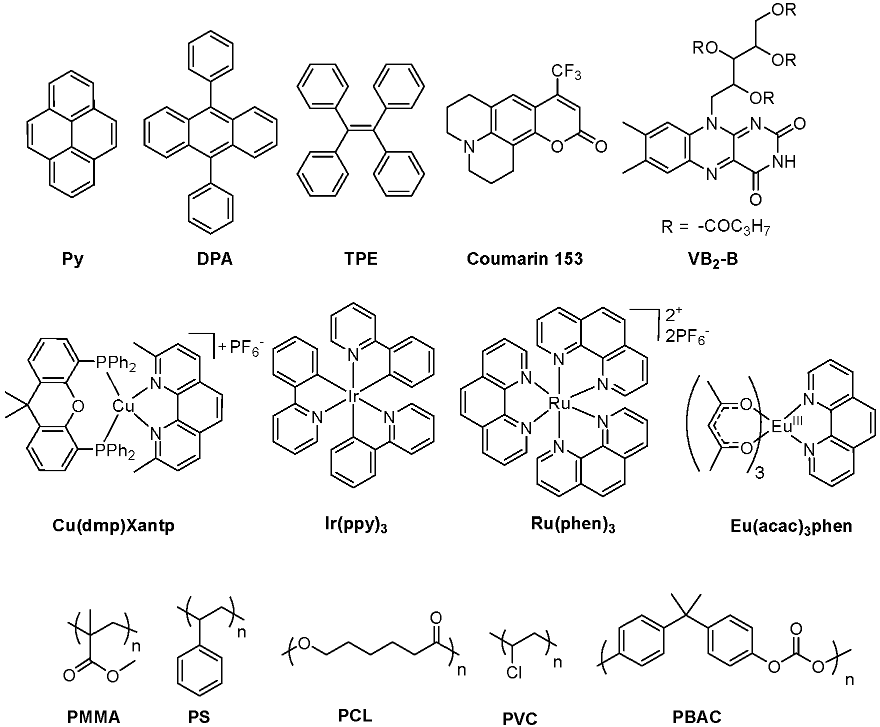
(Cu(dmp)Xantp, Ir(ppy)₃, Ru(phen)₃, and Eu(acac)₃(phen) not being according to the present invention)

Amorphous blended polymer films were prepared using the luminophores and polymethylmethacrylate (PMMA) by simply dissolving the powder of luminophore (1 - 10 wt%) and PMMA in dichloromethane, followed by casting on glass and dried under vacuum. PXRD and emission microscopy imaging of the films confirmed absence of crystal and microcrystalline phase (Fig. 1, 2, 3). The TL spectra of those luminophores in PMMA were measured by rubbing the surface with a glass tube containing a fiber optic probe inside a tube. The representative TL spectra under Ar gas are shown in Fig. 5. The TL spectra closely resemble photoluminescence (PL) spectra of the corresponding luminophores in PMMA films (Fig. 6). Emission maxima of PL and TL in PMMA are summarized in Table 1.

**[Table 1]**

| Table 1. PL and TL property of luminophores in PMMA film (1 wt%). | | | |
|---|---|---|---|
| Luminophore | In PMMA film^{a} | | |
| | PLQY | λₘₐₓ (PL) | λₘₐₓ (TL) |
| Py | 0.58 | 393 | 393 |
| DPA | 0.88 | 433 | 432 |
| TPE | 0.35 | 464 | 471 |
| Coumarin 153 | 0.59 | 516 | 508 |
| VB₂-B | 0.24 | 530 | 521 |
| Cu(dmp)(Xantp)* | 0.60 | 523 | 535 |
| Ir(ppy)₃* | 0.74 | 535 | 534 |
| Ru(phen)₃* | 0.17 | 598 | 595 |
| Eu(acac)₃(phen)* | 0.07 | 611 | 613 |

| | | | |
|---|---|---|---|
| ^{a} PL properties were measured under N₂ flow. TL were measured under Ar atmosphere. * not according to the present invention | | | |

Full range TL spectra show emission corresponding to argon gas discharge in near IR region (Fig. 12). Images of TL of PMMA films with 10 wt% of luminophores under Ar are shown in Fig. 7. Because of poor miscibility, uniform distribution of several metal-based luminophores not according to the present invention, Ru(phen)₃ and Ir(ppy)₃, could not be achieved in PMMA films with 10 wt%. TL spectra of luminophores blended in PMMA films in various gases including nitrogen, oxygen, helium, and dry air show TL spectrum containing peaks of corresponding luminophores as well as gas discharge emission lines (Fig. 8,9). In the absence of luminophores, PMMA films also show the corresponding gas discharge emission line, although no visible light emission discernible by naked eye is observed (Fig. 10). TL emission of PMMA films containing Cu(dmp)Xantp, Ir(ppy)₃, Ru(phen)₃ not according to the present invention is also observed under pure O₂ gas by spectroscopic measurement.

### [Example 2]

Next, we confirmed that TL is also observed when various polymer matrices were blended with the same set of luminophores including: polystyrene (PS), poly(ε-caprolactone) (PCL), poly(bisphenol A)carbonate (PBAC), poly(vinyl chloride) (PVC). TL spectra of the selection of nine luminophores in these polymers is shown in Fig. 12. To the best of our knowledge, observation of TL from biocompatible materials such a VB2-B and PCL is unprecedented.

### [Example 3]

We next confirmed that light emission is observed even in the absence of direct contact through the layer of another film not containing a luminophore or other additives, as illustrated in Fig. 13. To demonstrate it, PMMA or PS films containing a luminophore (1 wt%) were physically covered with a PVC polymer film not containing a luminophore. Then the surface of the PVC upper layer was rubbed with glass rod under dry air. The spectra are shown in Fig. 14. This is the first demonstration that TL of luminophores blended in polymers generated in the absence of direct friction by another material, which is generated mechanical stimuli through the layer of another inert, additive-free polymer. Rubbing the surface of PVC cover film using poly(dimethyl siloxane) (PDMS) rubber rod or Latex rubber instead of glass rod showed far stronger TL, which produces visible light emission even under dry air. The images of TL of Ir(ppy)₃ (2 wt%) not according to the present invention blended in PS films generated by rubbing PVC cover with silicone rubber in dark room under dry air is shown in Fig. 15. It was found that the TL intensity increases under argon atmosphere, which is probably due to lower dielectric strength of argon gas. The images of brighter TL of 1 wt% of luminophores blended in PS produced by gently stroking the surface of PVC cover film in dimmed room light are shown in Fig. 16. This TL was also observed by replacing the cover film of PVC with other polymer films including polyethylene terephthalate (PET) or polypropylene (PP) under argon atmosphere.

In summary, we have shown that triboluminescent polymer films can be obtained by simple physical blending of a wide range of polymer matrices with commonly available photoluminescent compounds. Rubbing polymer films directly or through a layer of another material produces visible light emission discernible even by naked eye, by spectroscopic methods or imaging methods. The emission can be seen under inert gas atmosphere or under dry air. Biocompatible luminophores such as VB2-B can also be utilized under these conditions.

### [Example 4]

In this example, triboluminescence of luminophore in PBAC film was investigated under humid air.

Each surface of PBAC films containing 3wt% of DPA or Cu(dmp)Xantp (not according to the present invention) was rubbed by a glass tube containing an optic fiber probe under humid air at 23 °C and a relative humidity of 34%, and the TL spectra of the PBAC films was measured. The TL spectrum of the PBAC containing DPA is shown in Fig. 17 (a), and the TL spectrum of the PBAC film containing Cu(dmp)Xantp (not according to the present invention) is shown in Fig. 17 (b).

PBAC films containing 10wt% of DPA or Cu(dmp)Xantp (not according to the present invention) were placed on each glass petri dish, and each surface of the PBAC films was rubbed 20 times by a silicon rubber rod hold by fingers under humid air at 24 °C and a relative humidity of 40%, and the TL image of the PBAC films was photographed at an exposure time of 5 seconds. The photograph of TL of the PBAC film containing DPA is shown in Fig.18 (a), and the photograph of TL of the PBAC film containing Cu(dmp)Xantp (not according to the present invention) is shown in Fig. 18 (b).

As shown in Fig 17 to 18, triboluminescence of luminophore in PBAC film was observed also under humid air.

### [Example 5]

In this example, triboluminescence of polymer film impregnated with luminophore was investigated. The impregnation was performed by drawing an image on the surface of the polymer film with a fluorescent marker.

First, a painting was drawn on PS film with permanent fluorescent markers, and the PS film was placed on a glass petri dish and fixed by an adhesive tape. The photograph of the painting taken under normal indoor illumination is shown in FIG. 19 (a), and the photograph of the painting under UV irradiation is shown in FIG. 19 (b). Subsequently, the PS film was covered with a PVC cover film, and TL of the painting was generated by rubbing the surface of the PVC cover film by 20 times with a silicon rubber rod hold by fingers in a glove box under a relative humidity of 0%. The TL image of the painting was photographed at an exposure time of 5 seconds. The photograph of TL of the painting is shown in Fig. 19 (c).

As shown in Fig. 19 (c), all color components in the fluorescent marker generated emission. Thus, triboluminescence was observed in the painting drawn with a common fluorescent marker, confirming that the invention is practical.

### [Example 6]

In this example, triboluminescence of luminophore in polymer film was investigated under vacuum.

PMMA films containing 10wt% of DPA or Cu(dmp)Xantp (not according to the present invention) were placed in each round-bottom glass flask, and the insides of the flasks were degassed to create a vacuum. Each bottom of the flasks was rubbed 20 times with a latex rubber glove to generate TL under humid air, and TL of the PMMA films was photographed at an exposure time of 5 seconds. The photograph of the round-bottom glass flask of the PMMA film before rubbing is shown in Fig.20 (a), the photograph of TL of the PMMA film containing DPA is shown in FIG.20 (b), the photograph of TL of the PMMA film containing Cu(dmp)Xantp (not according to the present invention) is shown in FIG.20 (c), and the photograph of the flask in a dark without rubbing is shown in FIG. 20 (d).

As shown in Fig. 20 (b) and (c), triboluminescence of luminophore in polymer film was observed even under vacuum.

### References

[1] aJ.-C. G. Bunzli, K.-L. Wong, Journal of Rare Earths 2018, 36, 1-41; bP. Jha, B. P. Chandra, Luminescence 2014, 29, 977-993; cS. Mukherjee, P. Thilagar, Angewandte Chemie International Edition 2019, 58, 7922-7932; dl. Sage, G. Bourhill, Journal of Materials Chemistry 2001, 11, 231-245; eE. Ubba, Y. Tao, Z. Yang, J. Zhao, L. Wang, Z. Chi, Chemistry - An Asian Journal 2018, 13, 3106-3121; fY. Xie, Z. Li, Chem 2018, 4, 943-971; gY. Zhuang, R.-J. Xie, Advanced Materials, 2021, 2005925.
[2] aR. S. Fontenot, W. A. Hollerman, K. N. Bhat, M. D. Aggarwal, B. G. Penn, Polymer Journal 2014, 46, 111-116; bT. M. George, M. J. Sajan, N. Gopakumar, M. L. P. Reddy, Journal of Photochemistry and Photobiology A: Chemistry 2016, 317, 88-99; cA. Incel, M. Emirdag-Eanes, C. D. McMillen, M. M. Demir, ACS Applied Materials & Interfaces 2017, 9, 6488-6496; dN. Takada, J.-i. Sugiyama, R. Katoh, N. Minami, S. Hieda, Synthetic Metals 1997, 91, 351-354.
[3] K. Nakayama , R. A. Nevshupa, Journal of Tribology 2003, 125, 780-787.
[4] A. Incel, C. Varlikli, C. D. McMillen, M. M. Demir, The Journal of Physical Chemistry C 2017, 121, 11709-11716.
[5] A. Karimata, P. H. Patil, R. R. Fayzullin, E. Khaskin, S. Lapointe, J. R. Khusnutdinova, Chemical Science 2020, 11, 10814-10820.

### [Industrial Applicability]

According to the invention, it is possible to realize the triboluminescent material that generates emission of light in response to mechanical stimulus without light irradiation of ultraviolet, infrared ray, as well as without applying electric current and voltage. According to the invention, it is also possible to realize the triboluminescent film and the mechanoresponsive sensor by using a wide range of luminophores which are organic compounds containing no metal element. It is still also possible to realize the stimuli sensors that act as indicator of temperature, pH, mechanical damage, chemical, which is utilized by TL in polymers Therefore, the invention has high industrial applicability.

## Claims

1. A material that generates emission of light in response to mechanical stimulus, comprising a luminophore and an amorphous polymer, wherein the luminophore is an organic compound containing no metal element.

2. The material according to claim 1, wherein the luminophore is not attached to the polymer covalently.

3. The material according to any one of claims 1 or 2, wherein the luminophore has a condensed polycyclic structure in which three or more rings are condensed.

4. The material according to any one of claims 1 to 3, wherein the luminophore is a compound represented by the following formula (2) 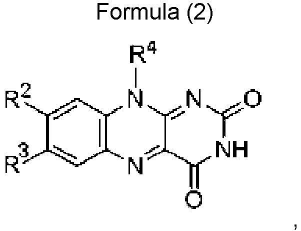 wherein R² and R³ each independently represent an alkyl group, and R⁴ represents an alkyl group substituted with an alkylcarbonyloxy group.

5. A material that generates emission of light in response to mechanical stimulus,
wherein the material comprises a layer containing a luminophore and a polymer, wherein the layer generates emission of light in response to mechanical stimulus, the luminophore is an organic compound containing no metal element or an organometallic complex, and the polymer is an amorphous polymer, and a luminophore-free layer containing a polymer and not containing a luminophore.

6. The material according to claim 5, wherein the luminophore-free layer is laminated on the layer containing the luminophore and the amorphous polymer.

7. The material according to claim 5 or 6, wherein the polymer of the layer containing the luminophore and the amorphous polymer and the polymer of the luminophore-free layer are different kinds of polymers.

8. The material according to any one of claim 5 to 7, wherein the polymer of the luminophore-free layer is a crystalline polymer.

9. The material according to any one of claims 5 to 8, wherein the layer containing the luminophore and the amorphous polymer is entirely covered with the luminophore-free layer.

10. The material according to any one of claims 5 to 8, wherein a part of the layer containing the luminophore and the amorphous polymer is covered with the luminophore-free layer.

11. The material according to any one of claims 1 to 10, wherein the amorphous polymer is selected from the group consisting of a polyacrylate, a polymethacrylate, a polystyrene, a poly (ε-caprolactone), a polycarbonate (a poly (bisphenol A) carbonate), a polyvinyl chloride, a polyurethane, a polyester, a polyamide, a polylactone, a polyalkyleneoxide, a polysiloxane, a polydimethylsiloxane, a polylactide, a polyolefin, a polyisobutylene, a polyamideimide, a polybutadiene, an epoxy resin, a polyacetylene, and a vinyl polymer.

12. A method for generating light emission in the material of claim 6 comprising applying mechanical action to the surface of the luminophore-free layer on an opposite side of the layer containing the luminophore and the amorphous polymer to generate light emission in the layer containing the luminophore and the amorphous polymer.

13. A method for producing a film comprising a material that emits light in response to mechanical action, the method comprising:
coating a solution of a luminophore which is an organic compound containing no metal element and an amorphous polymer on a base material and drying the coated solution, or
spreading a solid mixture of a luminophore which is an organic compound containing no metal element and an amorphous polymer into a film.

14. A mechanoresponsive sensor, fiber, or film comprising the material of any one of claims 1 to 11.

## Patentansprüche

1. Material, das die Emission von Licht als Antwort auf einen mechanischen Stimulus erzeugt, umfassend ein Luminophor und ein amorphes Polymer, wobei der Luminophor eine organische Verbindung ist, die kein Metallelement enthält.

2. Material nach Anspruch 1, wobei der Luminophor nicht kovalent an das Polymer gebunden ist.

3. Material nach einem der Ansprüche 1 oder 2, wobei der Luminophor eine kondensierte polyzyklische Struktur aufweist, in der drei oder mehr Ringe kondensiert sind.

4. Material nach einem der Ansprüche 1 bis 3, wobei der Luminophor eine Verbindung ist, dargestellt durch die folgende Formel (2) 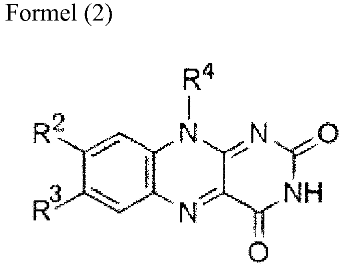 wobei R² und R³ jeweils unabhängig voneinander eine Alkylgruppe darstellen, und R⁴ eine Alkylgruppe darstellt, die mit einer Alkylcarbonyloxygruppe substituiert ist.

5. Material, das die Emission von Licht als Antwort auf einen mechanischen Stimulus erzeugt,
wobei das Material eine Schicht umfasst, die einen Luminophor und ein Polymer enthält, wobei die Schicht die Emission von Licht als Antwort auf einen mechanischen Stimulus erzeugt, der Luminophor eine organische Verbindung ist, die kein Metallelement oder einen metallorganischen Komplex enthält, und das Polymer ein amorphes Polymer ist, und eine Luminophor freie Schicht, die ein Polymer enthält und keinen Luminophor enthält.

6. Material nach Anspruch 5, wobei die Luminophor freie Schicht auf die Schicht laminiert ist, die den Luminophor und das amorphe Polymer enthält.

7. Material nach Anspruch 5 oder 6, wobei das Polymer der Schicht, die den Luminophor und das amorphe Polymer enthält, und das Polymer der Luminophor freien Schicht verschiedene Arten von Polymeren sind.

8. Material nach einem der Ansprüche 5 bis 7, wobei das Polymer der Luminophor freien Schicht ein kristallines Polymer ist.

9. Material nach einem der Ansprüche 5 bis 8, wobei die Schicht, die den Luminophor und das amorphe Polymer enthält, vollständig mit der Luminophor freien Schicht bedeckt ist.

10. Material nach einem der Ansprüche 5 bis 8, wobei ein Teil der Schicht, die den Luminophor und das amorphe Polymer enthält, mit der Luminophor freien Schicht bedeckt ist.

11. Material nach einem der Ansprüche 1 bis 10, wobei das amorphe Polymer ausgewählt ist aus der Gruppe, bestehend aus einem Polyacrylat, einem Polymethacrylat, einem Polystyren, einem Poly(ε-caprolacton), einem Polycarbonat (einem Poly(bisphenol A)carbonat), einem Polyvinylchlorid, einem Polyurethan, einem Polyester, einem Polyamid, einem Polylacton, einem Polyalkylenoxid, einem Polysiloxan, einem Polydimethylsiloxan, einem Polylactid, einem Polyolefin, einem Polyisobutylen, einem Polyamidimid, einem Polybutadien, einem Epoxidharz, einem Polyacetylen und einem Vinylpolymer.

12. Verfahren zur Erzeugung von Lichtemission in dem Material nach Anspruch 6, umfassend die Anwendung einer mechanischen Einwirkung auf die Oberfläche der Luminophor freien Schicht auf einer gegenüberliegenden Seite der Schicht, welche den Luminophor und das amorphe Polymer enthält, um eine Lichtemission in der Schicht, die den Luminophor und das amorphe Polymer enthält, zu erzeugen.

13. Verfahren zur Herstellung eines Films, umfassend ein Material, das Licht emittiert, als Antwort auf mechanische Einwirkung, wobei das Verfahren umfasst:
Auftragen einer Lösung eines Luminophors, der eine organische Verbindung ist, die kein Metallelement enthält, und eines amorphen Polymers auf ein Basismaterial und Trocknung der aufgetragenen Lösung, oder
Ausbreitung einer festen Mischung eines Luminophors, der eine organische Verbindung ist, die kein Metallelement enthält, und eines amorphen Polymers zu einem Film.

14. Mechanoreaktiver Sensor, Faser, oder Film, umfassend das Material nach einem der Ansprüche 1 bis 11.

## Revendications

1. Matériau qui génère une émission de lumière en réponse à un stimulus mécanique, comprenant un luminophore et un polymère amorphe, dans lequel le luminophore est un composé organique ne contenant aucun élément métallique.

2. Matériau selon la revendication 1, dans lequel le luminophore n'est pas lié au polymère de manière covalente.

3. Matériau selon l'une des revendications 1 ou 2, dans lequel le luminophore présente une structure polycyclique condensée dans laquelle trois cycles ou plus sont condensés.

4. Matériau selon l'une des revendications 1 à 3, dans lequel le luminophore est un composé représenté par la formule (2) suivante 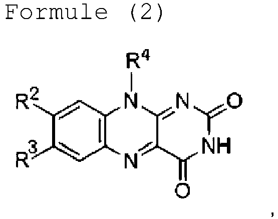 dans laquelle R² et R³ représentent chacun indépendamment un groupe alkyle, et R⁴ représente un groupe alkyle substitué avec un groupe alkylcarbonyloxy.

5. Matériau qui génère une émission de lumière en réponse à un stimulus mécanique,
dans lequel le matériau comprend une couche contenant un luminophore et un polymère, dans lequel la couche génère une émission de lumière en réponse à un stimulus mécanique, le luminophore est un composé organique ne contenant aucun élément métallique ou complexe organométallique, et le polymère est un polymère amorphe, et une couche exempte de luminophore contenant un polymère et ne contenant pas de luminophore.

6. Matériau selon la revendication 5, dans lequel la couche exempte de luminophore est stratifiée sur la couche contenant le luminophore et le polymère amorphe.

7. Matériau selon la revendication 5 ou 6, dans lequel le polymère de la couche contenant le luminophore et le polymère amorphe et le polymère de la couche exempte de luminophore sont différents types de polymères.

8. Matériau selon l'une des revendications 5 à 7, dans lequel le polymère de la couche exempte de luminophore est un polymère cristallin.

9. Matériau selon l'une des revendications 5 à 8, dans lequel la couche contenant le luminophore et le polymère amorphe est entièrement recouverte par la couche exempte de luminophore.

10. Matériau selon l'une des revendications 5 à 8, dans lequel une partie de la couche contenant le luminophore et le polymère amorphe est recouverte par la couche exempte de luminophore.

11. Matériau selon l'une des revendications 1 à 10, dans lequel le polymère amorphe est sélectionné parmi le groupe consistant en un polyacrylate, un polyméthacrylate, un polystyrène, une poly(ε-caprolactone), un polycarbonate (un polycarbonate de (bisphénol A)), un polychlorure de vinyle, un polyuréthane, un polyester, un polyamide, une polylactone, un poly(oxyde d'alkylène), un polysiloxane, un polydiméthylsiloxane, un polylactide, une polyoléfine, un polyisobutylène, un polyamideimide, un polybutadiène, une résine époxy, un polyacétylène et un polymère vinylique.

12. Procédé de génération d'une émission de lumière dans le matériau selon la revendication 6 comprenant l'application d'une action mécanique sur la surface de la couche exempte de luminophore sur un côté opposé de la couche contenant le luminophore et le polymère amorphe pour générer une émission de lumière dans la couche contenant le luminophore et le polymère amorphe.

13. Procédé de production d'un film comprenant un matériau qui émet une lumière en réponse à une action mécanique, le procédé comprenant :
l'application d'une solution d'un luminophore qui est un composé organique ne contenant aucun élément métallique et un polymère amorphe sur un matériau de base et le séchage de la solution appliquée, ou
l'étalement en film d'un mélange solide d'un luminophore qui est un composé organique ne contenant aucun élément métallique et d'un polymère amorphe.

14. Capteur, fibre ou film mécanoréactif comprenant le matériau selon l'une des revendications 1 à 11.
